# EUROPÄISCHE PATENTANMELDUNG

(11) **EP 0 875 362 A2**
(43) Veröffentlichungstag der Anmeldung: **04.11.1998**
(21) Anmeldenummer: 98104079.3
(22) Anmeldetag: 07.03.1998
(51) Int. Cl.: B29C 65/04

(54) **Mittels HF-Schweissen hergestellte Verbindung zwischen Rohr und Anbindungselement**

(30) Priorität: 02.05.1997 DE 19718503
(71) Anmelder: HÜLS AKTIENGESELLSCHAFT, 45764 Marl (DE)
(72) Erfinder: Brudny, Günther, 45772 Marl (DE); Göring, Rainer, 46325 Borken (DE); Lorenz, Frank, 59399 Olfen (DE); Schmitz, Guido, Dr., 48249 Dülmen (DE)

(57) **Zusammenfassung**

Eine hochgradig axial belastbare und dauerhaft leckagefreie Verbindung zwischen einem Anbindungselement und einem Rohr, die beide aus thermoplastischem Kunststoff bestehen, wird durch Schweißen mittels eines elektrischen Hochfrequenzfeldes hergestellt.

Die Verbindung findet Anwendung beispielsweise in Leitungssystemen zur Fuhrung gasförmiger oder flüssiger Medien.

## Beschreibung

Gegenstand der Erfindung ist eine Schweißverbindung zwischen einem Kunststoffrohr und einem Anbindungselement, welche mittels eines elektrischen Hochfrequenzfeldes hergestellt wird.

Heutzutage gebräuchliche Anbindungselemente, z. B. sogenannte Quick Connectoren (siehe G. Szabo, SAE Technical Paper Series # 940167, Development Trends for Automotive Fluid Systems Connections), besitzen einen Dorn, der als Verbindungselement zu dem anzubringenden Rohr fungiert. Die geometrische Gestaltung des Dornes besitzt dabei z. B. die Form eines Tannenzapfens, wobei der Außendurchmesser des Dornes größer ist als der Innendurchmesser des Rohres. Der Dorn des Anbindungselements wird in das Rohr mit großer Geschwindigkeit eingeführt, wobei sich das Rohr aufgrund des geringeren Innendurchmessers aufweitet. Problematisch an einer solchen Verbindungstechnik ist jedoch, daß die Dichtkräfte zwischen Rohr und Anbindungselement, die durch die aufgrund der Aufweitung des Rohres verursachte Umfangsspannung bewirkt werden, aufgrund von Relaxationsvorgängen im Laufe der Zeit, insbesondere aber bei höheren Gebrauchstemperaturen, wie sie z. B. in Kühlmittelleitungen herrschen, bei mechanischen Beanspruchungen (Vibrationen) oder auch durch Kraftstoffeinfluß bei kraftstofführenden Leitungssystemen geringer werden. Somit besteht bei solchen Anbindungselementen die Gefahr von Undichtigkeiten, da zu geringe Dichtkräfte zu einer Leckage führen können.

Daher wurden andere Anbindungstechniken zur Lösung dieses Problems entwickelt Bei diesen Techniken wird z. B. ein geeignet gestalteter Quick Connector in das Rohr eingeführt und anschließend in Rotation versetzt. Aufgrund der Reibkräfte zwischen Quick Connector und Rohr erwärmen sich die Kunststoffe in der Fügefläche und können bei Überschreiten der Schmelztemperatur miteinander verschweißt werden. Hiermit können zwar leckagefreie Verbindungen zwischen einem Rohr und einem Anbindungselement hergestellt werden; aufgrund der hohen Reibkräfte zwischen Rohr und Quick Connector ist dieses Verbindungsverfahren jedoch mit einer hohen Torsionsbeanspruchung insbesondere des Rohres verbunden, die sich negativ auf die Eigenschaften des Rohres auswirken kann. Ein weiterer Nachteil des Rotationsschweißverfahrens ist der Schweißaustrieb, also das durch die Reibwirkung in der Fügefläche zwischen Quick Connector und Rohr verflüssigte Material. Aufgrund der aufgebrachten Anpreßkräfte kann dieses Material in das Innere des Rohres gelangen und so den Strömungsquerschnitt des Leitungssystems verengen. Eventuell können auch Tropfen aus diesem Schweißaustrieb im Rohrinneren entstehen, die beim späteren Gebrauch des Leitungssystems von der Strömung mitgerissen werden und z. B. Ventile verstopfen können. Negativ wirkt sich ein erhöhter Schweißaustrieb auch auf die Festigkeit der Verbindung aus, da dieser mit einer Kerbwirkung einhergeht, die die Festigkeit der Verbindung reduziert. Beim Rotationsschweißen ist nun die Kontrolle der Anpreßkräfte äußerst schwierig, da einerseits hohe Anpreßkräfte benötigt werden, um ein rasches Aufschmelzen des Materials und damit kurze Fugezeiten zu erreichen. Mit diesen hohen Anpreßkräften besteht jedoch die große Gefahr des unkontrollierten Schweißaustriebs. Andererseits verlängert sich bei zu geringen Anpreßkräften die Fugezeit, was im Sinne eines wirtschaftlichen Verfahrens ebenfalls nicht enwünscht ist.

Es ist daher Aufgabe der Erfindung, die Nachteile, die mit dem Rotationsschweißen verbunden sind, zu vermeiden. Diese Aufgabe konnte durch ein Verfahren gelöst werden, bei dem die Verbindung zwischen Anbindungselement und Rohr, die beide aus thermoplastischem Kunststoff bestehen, durch Schweißen mittels eines elektrischen Hochfrequenzfeldes (HF-Schweißen) hergestellt wird. Bei dieser Technik wird bevorzugt der geeignet gestaltete Dorn des Anbindungselements in das Rohr geschoben. Die Verbindungsstelle wird von einer Elektrode umfaßt, die beispielsweise aus zwei Elektrodenbacken besteht, welche gegebenenfalls gleichzeitig so gestaltet sind, daß sie einen Anpreßdruck ausüben können. Als Gegenstuck zu der außen angeordneten Elektrode wird in einer Ausführungsform der Erfindung eine Elektrode in das Innere des Connectors geschoben. Es ist jedoch im Rahmen der Erfindung auch möglich, einen geeignet gestalteten Quick Connector über das Rohr zu schieben, wobei ein Anpreßdruck durch die Innenelektrode oder ebenfalls durch außen angelegte Backen realisiert werden kann. Beide Maßnahmen können mit einem geeignet geformten Anbindungselement auch kombiniert werden. Durch Anlegen eines HF-Feldes zwischen diesen beiden Elektroden erwärmt sich der Kunststoff so daß Anbindungselement und Rohr bei Erreichen der Fügetemperatur miteinander verschweißen. Vorteilhaft an dieser Verbindung ist zum einen, daß die hohe Torsionsbeanspruchung des Rohres vermieden wird. Zum anderen kann, anders als beim Rotationsschweißen` die Anpreßkraft unabhängig von der eigentlichen Schweißung gesteuert werden, so daß die Entstehung von Schweißaustrieb und damit von Kerben in der Schweißverbindung vermieden werden kann.

Das Rohr kann hierbei aus einer Schicht bestehen oder es kann als Mehrschichtrohr vorliegen. Mehrschichtrohre sind Stand der Technik; sie sind aus einer Vielzahl von Patentanmeldungen bekannt und werden insbesondere in der Automobilindustrie in großem Umfang verwendet (siehe z. B. EP-A-0 730 115 sowie die darin genannten Schriften).

Die Materialwahl für das Anbindungselement richtet sich nach dem Material des Rohres oder bei Mehrschichtrohren nach dem Material der mit dem Anbindungselement zu verschweißenden Schicht. Die Materialien müssen identisch oder zumindest miteinander verträglich sein, wobei die Schweißverbindung sowohl rohrinnenseitig als auch rohraußenseitig erfolgen kann, je nachdem, ob das Anbindungselement eingefügt oder aufgeschoben wird. Beispielsweise können für das Anbindungselement Formmassen verwendet werden, die in der Hauptsache aus Polyamid 6 (PA6), PA6.6, PA6.12, PA11, PA12, Polyketon, Polybutylenterephthalat, Polyvinylidenfluorid oder Polyvinylchlorid bestehen. Ein mehrschichtiges Anbindungselement kann darüber hinaus auch eine oder mehrere Schichten aus Polyoxymethylen, Polyethylen bzw. Polypropylen enthalten. Alle verwendeten Formmassen können, entsprechend dem Stand der Technik, Füllstoffe, faserförmige Verstärkungsmittel und/oder elektrisch leitfähige Zusatzstoffe enthalten.

Bei der Anwendung des HF-Schweißverfahrens auf die vorgenannte Verbindung hat es sich als Vorteil erwiesen, wenn elektrisch leitfähig ausgerüstete Materialien für das Anbindungselement und/oder das Rohr zum Einsatz kommen. Ist z. B. das Anbindungselement aus einem leitfähig eingestellten Material hergestellt, kann es selbst als Elektrode fungieren, so daß nur noch eine weitere Elektrode für die Schweißung benötigt wird. Genauso kann das Rohr als ganzes elektrisch leitfähig ausgerüstet sein oder eine leitfähige Schicht enthalten. Derartige Rohre sind Stand der Technik (z. B. DE-C-40 01 125 und EP-A-0 730 115). Insgesamt können also ein Teil oder auch alle der zum Einsatz kommenden Materialien elektrisch leitfähig ausgerüstet sein.

Genauere Informationen zum HF-Schweißen sind der DIN 16960, Blatt 1, "Schweißen von thermoplastischen Kunststoffen", Februar 1974, zu entnehmen.

Als Anbindungselement kann im Sinne der Erfindung ein Quick Connector oder auch jedes andere gebräuchliche, aus Kunststoff bestehende Anbindungselement verwendet werden.

Die erfindungsgemäß hergestellte Schweißverbindung ist hochgradig axial belastbar und dauerhaft leckagefrei. Sie findet Anwendung beispielsweise in Leitungssystemen zur Führung gasförmiger oder flüssiger Medien, etwa in Kühlmittel-, Kraftstöff- oder Klimaanlagenleitungssystemen, wobei das Leitungssystem, je nach den Erfordernissen, entweder eine oder auch mehrere dieser Schweißverbindungen enthalten kann.

### Beispiel

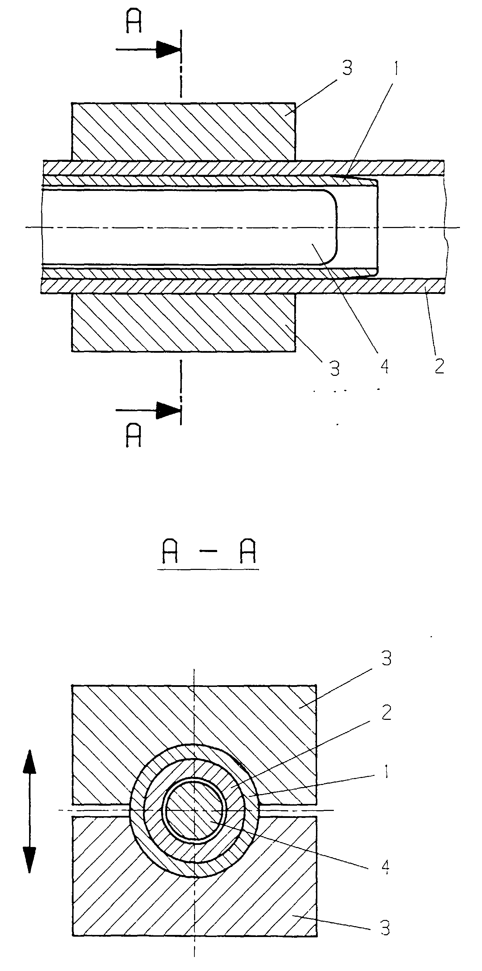

Fig. 1 zeigt eine mögliche Schweißanordnung während des Hochfrequenzschweißens. Über den Dorn eines Connectors **(1)** aus einer Polyamid-Formmasse ist ein Rohr **(2)** aus einer ähnlichen Polyamid-Formmasse geschoben, welches von zwei Backen **(3)** umfaßt wird. Mit Hilfe der beiden Backen wird der für die Schweißung benötigte Fügedruck aufgebracht. Darüber hinaus dienen die Backen als Elektrode. Die Gegenelektrode **(4)** ist in diesem Beispiel in den Connector eingeschoben. Dann wird für etwa 3 bis 4 Sekunden zwischen beiden Elektroden ein Hochfrequenzfeld erzeugt, mit dem sowohl die Formmasse des Connectors als auch die des Rohres erwärmt wird, so daß die Schweißung in der Grenzfläche zwischen Rohr und Connector erfolgte Nach kurzer Kühlung ist die Schweißstelle mechanisch belastbar.

## Patentansprüche

1. Verbindung zwischen einem Anbindungselement und einem Rohr, die beide aus thermoplastischem Kunststoff bestehen,
dadurch gekennzeichnet,
daß sie durch Schweißen mittels eines elektrischen Hochfrequenzfeldes hergestellt wird.

2. Verbindung gemäß Anspruch 1,
dadurch gekennzeichnet,
daß das Rohr aus einer Schicht besteht oder als Mehrschichtrohr vorliegt.

3. Verbindung gemäß einem der vorhergehenden Ansprüche,
dadurch gekennzeichnet,
daß sich die Schweißnaht an der Außenfläche und/oder Innenfläche des Rohres befindet.

4. Verbindung gemäß einem der vorhergehenden Ansprüche,
dadurch gekennzeichnet,
daß das Anbindungselement aus einer Formmasse aufgebaut ist die in der Hauptsache aus PA6, PA6.6, PA6.12, PA11, PA12, Polyketon, Polybutylenterephthalat, Polyvinylidenfluorid oder Polyvinylchlorid besteht

5. Verbindung gemäß einem der vorhergehenden Ansprüche,
dadurch gekennzeichnet,
daß ein mehrschichtiges Anbindungselement eingesetzt wird, das eine oder mehrere Schichten aus Polyoxymethylen, Polyethylen bzw. Polypropylen enthalt.

6. Verbindung gemaß einem der vorhergehenden Ansprüche,
dadurch gekennzeichnet,
daß ein Teil oder alle der zum Einsatz kommenden Materialien elektrisch leitfähig ausgerüstet sind.

7. Verbindung gemäß einem der vorhergehenden Ansprüche,
dadurch gekennzeichnet,
daß das Anbindungselement ein Quick Connector ist.

8. Verfahren zur Herstellung einer Verbindung gemäß einem der vorhergehenden Ansprüche,
dadurch gekennzeichnet,
daß die Verbindung durch Schweißen mittels eines elektrischen Hochfrequenzfeldes hergestellt wird.

9. Verfahren gemäß Anspruch 8,
dadurch gekennzeichnet,
daß der Dorn des Anbindungselements in das Rohr geschoben wird und die Verbindungsstelle von einer Elektrode von außen umfaßt wird.

10. Verfahren gemäß Anspruch 9,
dadurch gekennzeichnet,
daß zusätzlich eine Elektrode in das Innere des Anbindungselements geschoben wird.

11. Verfahren gemäß Anspruch 9,
dadurch gekennzeichnet,
daß das elektrisch leitfähig ausgerüstete Anbindungselement und/oder das elektrisch leitfähig ausgerüstete Rohr als zweite Elektrode fungieren.

12. Verfahren gemäß einem der Ansprüche 9 bis 11,
dadurch gekennzeichnet,
daß die äußere Elektrode einen Anpreßdruck ausübt.

13. Verfahren gemaß Anspruch 8,
dadurch gekennzeichnet,
daß das Anbindungselement über das Rohr geschoben wird.

14. Verfahren gemäß Anspruch 13,
dadurch gekennzeichnet,
daß durch die Innenelektrode oder durch außen angelegte Backen ein Anpreßdruck realisiert wird.

15. Verwendung der Verbindung gemäß einem der Ansprüche 1 bis 7 beziehungsweise einer nach einem der Ansprüche 8 bis 14 hergestellten Verbindung in einem Leitungssystem zur Führung gasförmiger oder flüssiger Medien.

16. Verwendung eines Leitungssystems, welches eine oder mehrere der Verbindungen gemäß einem der Ansprüche 1 bis 7 beziehungsweise eine oder mehrere der nach einem der Ansprüche 8 bis 14 hergestellten Verbindungen enthält, zur Führung gasförmiger oder flüssiger Medien.
